# EUROPEAN PATENT APPLICATION

(11) **EP 1 416 426 A2**
(43) Date of publication of application: **06.05.2004**
(21) Application number: 03003428.4
(22) Date of filing: 14.02.2003
(51) Int. Cl.: G06K 9/22, G06F 3/033

(54) **Handwritten character input device, program and method**

(30) Priority: 31.10.2002 JP 2002316983
(71) Applicant: Hitachi, Ltd., Chiyoda-ku, Tokyo 101-8010 (JP)
(72) Inventor: Furukawa, Naohiro, Hitachi, Ltd., Intellect.Prop., Tokyo 100-8220 (JP); Ikeda, Hisashi, Hitachi, Ltd., Intellect. Property, Tokyo 100-8220 (JP); Sako, Hiroshi, Hitachi, Ltd., Intellect. Property, Tokyo 100-8220 (JP); Tazawa, Naoko, Hitachi, Ltd., Intellect. Property, Tokyo 100-8220 (JP)
(74) Representative: Strehl Schübel-Hopf & Partner

(57) **Abstract**

There is provided a means for allowing a computer to process modifications of entered contents such as deleting, adding, replacing, and emphasizing entered characters by maintaining the same work feeling as for ordinary writing using paper and a pen as much as possible when a tablet or an electronic pen is used as an entry means.

For this purpose, a user can use such symbols used for ordinary writing as a double-line or fill signifying deletion, a caret, inverted caret, or arrow signifying addition, and a surrounding line or underline signifying emphasis. These symbols are associated with control commands to specify the beginning of these modification processes and characters to be modified. These commands are automatically detected from handwriting information to automatically execute the corresponding process.

The detection of characters to be modified uses character extraction information generated from the character recognition technique. When a control symbol such as the double-line or the surrounding line is written, the process finds a degree of overlapping between the character extraction information and the control symbol and uses a result for determination of characters to be modified, thus providing high-precision detection.

## Description

### FIELD OF THE INVENTION

The present invention relates to an information input method in an electronic pen and an information processing apparatus having a means for converting handwritten characters and graphics information into electronic data. More specifically, the present invention relates to a method and an apparatus for reflecting deletion, addition, replacement, and emphasis of handwritten character information on electronic data.

### BACKGROUND OF THE INVENTION

Generally, a keyboard or a mouse is used as a means for entering information into a computer. However, there is an increasing demand for a means for entering information by means of "handwriting", a more natural action to the human being. For such demand, there is provided a means for entering information by using an electronic pen for handwriting, obtaining a track of the pen, and reconstructing characters and graphics on a computer.

There are available means for computerizing characters and graphics handwritten by the human being and entering them into the computer. For example, one method uses a pressure-sensitive device called a tablet and a pen-shaped tool called a stylus that applies a pressure thereto. When the stylus is used to handwriting on the pressure-sensitive device, a stylus track thereon is converted into an electric signal that is then input as a character or graphics into the computer. Such method is put to practical use as a means for entering characters and graphics oriented to PCs, workstations, and PDA (Personal Digital-Assistant) products.

There is available another method of computerizing characters and graphics handwritten by the human being and entering them into the computer. For example, the method uses an electronic pen provided with a camera device to obtain reflected infrared light; and paper printed with a dots pattern capable of uniquely locating the pen on the paper. The camera device captures the dots pattern. The pen movement corresponding to the handwriting is generated as positions on the paper, i.e., a series of coordinates that is then input as a character or graphics to the computer (e.g., see patent document 1). According to these means, there is available a handwriting input system using the electronic pen having the position detection function on the handwriting surface and using the pressure-sensitive input device such as the tablet. Alternatively, there is available another handwriting input system using the electronic pen and the paper printed with a special design for position detection. In these systems, the electronic pen or the pressure-sensitive device collects, at a specified time interval, (1) positions on the tablet or the paper and (2) tool forces applied to the electronic pen or the tablet surface. Information about the positions and tool forces is output chronologically or together with the time information. By reproducing pen tracks from the information (1) and (2), it becomes possible to use the computer to generate information about structures and shapes of the characters and graphics the human being "writes" on the tablet or the paper. That is to say, a character written by the human being is stored as graphics information, not coded information, stored on the computer.

With respect to forms of using the computer to maintain the character information entered by the human being, consideration should be given to subsequent processes such as the database retrieval on the computer. Affinity to the computer processing increases when a character as pen track information is converted into a character code so as to be maintained on the computer. The character recognition is used for conversion from the track information, i.e., a character as graphics into a character code. More specifically, a generally known technique uses a series of the pen's track position information sampled at a given time unit. The pen's track position information is compared with a position information template that is predefined for each character. A label of the most consistent template is used as a series of the input position information, i.e., as a recognition result for the character.

The use of the above-mentioned means can provide capabilities of supplying the computer with character information written by the human being as graphics or encoding that character information into text data and supplying it to the computer.

For example, the schedule management software operating on PDAs is applicable to the situation of inputting characters and graphics to the computer from the handwriting input means using pressure-sensitive devices such as a stylus and a tablet. When assigning a new schedule or changing the registered schedule, a PDA user uses a stylus on the PDA' s writing surface to write character strings representing information such as the time, destination, appointed person, and the like.

As another example, an electronic application at the city hall's counter is applicable to the situation of inputting characters and graphics to the computer from the handwriting input means using the above-mentioned electronic pen and the paper printed with the dots pattern for position detection. When applying for a resident card in the city hall, an applicant writes character strings such as his or her name, date, address, and intended use on a prepared application form. The applicant submits the filled application form to the counter. Then, an electronic pen is used to transfer the handwriting information to the computer and generate an input to the city hall's application system.

Further, it is possible to assume a case in which a map or a message is written on paper and then is computerized for transmission to the destination by means of a cellular phone or the like in order to notify the distant party of each other's position.

In any case, all the tracks of the stylus or the electronic pen are recorded as the position information. Characters or graphics the user wrote are all input to the computer as they are. That is to say, if the user inadvertently writes a character, the incorrectly written character is computerized and is stored in the computer.

Here, there is provided a method for an apparatus that allows the user to write characters on the tablet and computerizes them. The user specifies a character to be deleted using a surrounding line, and then touches a special button on the tablet. This deletes the character inside the surrounding line. This method is hereafter referred to as conventional method A (e.g., see patent document 2).

### [Patent document 1]

National Publication No. 00/73981 brochure

### [Patent document 2]

Japanese Patent Laid-open No. 2001-1477 79

### [Non-patent document 1]

The Institute of Electronics, Information and Communication Engineers. Pattern Recognition. ed. Ken'ichi Mori: the Institute of Electronics, Information and Communication Engineers, November 1, 1988.

According to conventional method A, the user draws the surrounding line to specify a character string to be deleted. The user then touches a deletion button provided at a specified position on the tablet to delete the specified character string. The user needs to enter control information of initiating the deletion process. On the other hand, the user may change the contents while filling in the application form. For example, when a double-line is used to overwrite a word to be deleted or emphasize it, a surrounding line is generally used to enclose a character string to be emphasized. In other words, conventional method A forces the user to do a new operation in addition to ordinary writing. It has been difficult to apply such method to, e.g., a submission system application forms at counter that can be hardly made known to users in advance.

Conventional method A only provides deletion. Generally, when filling in an application form or a schedule, the user may not only delete an inadvertently written character, but also add a new character. Further, the user may add a new character to supplement the described contents in the form of a comment or notes. In such case, conventional method A merely specifies a character to be deleted by drawing the surrounding line for that character. The method cannot extract an added character and therefore cannot add characters. When the user inadvertently writes a character, he or she may delete the incorrect character and write a correct character for replacement. Moreover, the user may want to emphasize the described character using an underline. Conventional method A has not been able to comply with the addition, replacement, and emphasis.

Furthermore, conventional method A does not explicitly provide a method of detecting a pen track to be deleted. When a character to be deleted overlaps the other characters not to be deleted, for example, a deletion area cannot be specified with the surrounding line. Since conventional method A is used for deleting printed characters, it cannot be applied to handwritten character strings that can cause a contact between characters.

The present invention has been made in consideration of the foregoing. It is therefore an object of the present invention to provide a handwritten character input means using a tablet or an electronic pen capable of operations by keeping the same work feeling as for ordinary writing using a pen and paper. When a written character needs to be modified with the handwritten character input method using a tablet or an electronic pen, there is provided a means for starting a modification work by automatically recognizing a conventional writing action such as drawing a double-line or underline on the paper without forcing the user to do a special action such as pressing a button.

It is another object of the present invention to provide a means capable of modifying written contents in such a manner as deletion, addition, replacement, and emphasis, and saving a history of modification works. Modifications are available after the user's handwritten character input is converted from image information into code information. When the user makes a correction, addition, or emphasis under the handwriting environment, i.e., on the tablet or the paper printed with a pattern capable of the position detection, the modification result is also reflected on the coded information in the computer.

It is still another object of the present invention to provide
a means for precisely detecting a character of which written contents should be modified.

To make a summary of the foregoing, the object of the present invention is to provide a means for automatically detecting commands to control computer processes such as deletion, addition, replacement, and emphasis from characters and graphics written by a user on a tablet or paper and automatically executing the process.

### SUMMARY OF THE INVENTION

The invention disclosed in the application concerned is mainly embodied as follows. There is provided a handwritten character input device networked to an electronic pen capable of outputting information about a writing position on a writing surface and information about a time to obtain the information, wherein the handwritten character input device has a control means, a display means, and a storage means; the storage means stores a plurality of control symbols; the control means controls: a step of extracting the control symbol from writing position information obtained from the electronic pen, a step of determining a type of the control symbol and performing a corresponding and stored process, and a step of using writing position information after execution of the process and allowing the display means to display an entry onto the writing surface. The present invention includes, in particular, deletion, addition, modification, and the like of the writing position information and provides a system including an electronic pen, a server, and the like.

Further, the present invention provides an addition method of extracting the symbol to specify an addition location from information obtained from the electronic pen; detecting information specifying the beginning and end of additional information; extracting the writing position information as addition information, wherein the writing position information is obtained between a time to obtain the information to specify the beginning of the addition information and a time to obtain the information to specify the end thereof; inserting the addition information between the writing position information before the addition location and the writing position information thereafter; and representing description on a writing surface.

### BRIEF DESCRIPTION OF THE DRAWINGS

FIG. 1 describes the principle of position detection using an electronic pen;
FIG. 2A exemplifies an apparatus to detect a position on paper using a electronic pen;
FIG. 2B exemplifies a flow of information to detect a position on paper using a electronic pen;
FIG. 3 outlines how to computerize contents of an application form using a electronic pen;
FIG. 4 outlines deletion, addition, replacement, and emphasis in a handwritten character input method;
FIG. 5 shows a flow of character recognition;
FIG. 6 shows a flow of character recognition with control symbols;
FIG. 7 exemplifies control symbols;
FIG. 8A exemplifies an extended emphasis control symbol;
FIG. 8B exemplifies an extended emphasis control symbol;
FIG. 8C exemplifies an extended emphasis control symbol;
FIG. 8D exemplifies an extended emphasis control symbol;
FIG. 9A shows an example of extracting characters to be deleted;
FIG. 9B shows another example of extracting characters to be deleted;
FIG. 9C shows still another example of extracting characters to be deleted;
FIG. 9D shows yet another example of extracting characters to be deleted;
FIG. 10 shows a flow of extracting characters to be deleted;
FIG. 11 shows an example of entering additional characters;
FIG. 12 shows a flow of extracting an additional character pattern;
FIG. 13 shows an apparatus configuration according to the embodiment;
FIG. 14A shows a state on the paper for replacement;
FIG. 14B shows an example of displaying'a state before replacement;
FIG. 14C shows an example of displaying a state before and after replacement;
FIG. 14D shows an example of displaying a state after replacement;
FIG. 15A shows an example of handwritten image;
FIG. 15B exemplifies a stroke data structure;
FIG. 16A shows an example of handwritten image to be deleted;
FIG. 16B exemplifies a stroke data structure before deletion;
FIG. 17 exemplifies a stroke data structure after deletion;
FIG. 18A shows an example of handwritten image to be replaced; and
FIG. 18B exemplifies a stroke data structure after replacement.

### DESCRIPTION OF THE PREFERRED EMBODIMENTS

Embodiments of the present invention will be described in further detail.

When a user enters a character and modifies it by deleting, adding, replacing, or emphasizing it according to an embodiment of the present invention, such modification needs to be reflected on computerized data. For this purpose, it is necessary to identify a stroke that is generated by movement of a stylus or an electronic pen on a tablet or paper. More specifically, it must be determined whether the stroke corresponds to a normal character or to entered contents to be modified.

Further, an input device such as the tablet or the electronic pen transfers a series of positional data for the pen track to a processor. The embodiment constructs stroke data and partial line data that is a collection of strokes. Here, the stroke data is equivalent to a stroke of handwriting from the handwriting position information. When the partial line data is inserted between control commands indicating the beginning and end of deletion, addition, replacement, or emphasis, the partial line data can be identified for these modifications. There is provided a flag for distinguishing partial line data before and after the modification. There is also provided a pointer that keeps correspondence between partial line data before and after the modification. Since a history of changes is recorded in this manner, it is possible to select to display only the text after modification or display the text before and after modification at a time on a display apparatus such as a monitor.

It is necessary to detect control commands that automatically identify the beginning and end of modifications such as deletion, addition, replacement, and emphasis while the user writes text without the need for special actions such as pressing a button. When the user writes on the paper, he or she can normally use such symbols as a double-line or a fill for deletion or replacement, a caret, an inverted caret, or an arrow for addition, and a surrounding line or an underline for emphasis. These symbols correspond to control commands that specify the beginning of the modification and text to be modified. A double-slash or a comma corresponds to a control command that specifies the end of the text to be modified. Moreover, it is also possible to automatically generate the control command for the end of modification according to information about a distance between consecutively handwritten strokes or the writing time.

In order to detect the symbols (hereafter referred to as the control symbols) corresponding to the control commands, there are provided a function of text line estimation from a series of stroke data; a function of shape-based control symbol recognition; a function of determining types of modifications such as deletion, addition, replacement, and emphasis; a function of estimating a character to be modified; and a function of making correspondence between modified partial line data.

The function of text line estimation from a stroke'data series is disclosed in Japanese Patent Laid-open No. H11 (1999)-96288. For horizontal writing, this function groups only strokes that maintain the uniformity of vertical positions of the stroke data. The function makes it possible to estimate top and bottom positions of the text line.

The function of shape-based control symbol recognition and the function of determining types of modifications recognize whether a series of successive strokes is the predetermined control symbol according to its shape, and determines to which process the symbol corresponds. Before shape recognition, these functions assume the use of a caret or an underline for a stroke that deviates from the top or bottom of the text line determined by the function of text line estimation. Further, the symbol is assumed to be a double-line if there already exists an element of the text line, i.e. , the stroke assumed to be a character at the stoke position. For example, shapes can be recognized by the character recognition technique that assumes the direction of a shape contour to be the characteristic amount ("Handbook of Character Recognition and Document Image Analysis", H. Bunke, P.S.P. Wang, World Scientific, 1997).

The function of estimating a character to be modified assumes a character component to be modified if that character exists at a position of the control symbol detected by the function of control symbol recognition. For example, the replacement configures partial line data comprising a set of strokes overwritten by a double-line. This partial line data is assumed to be a character string before the replacement. The partial line data comprising a stroke immediately after the control symbol to a termination control symbol is assumed to be a character string after the replacement. The function of making correspondence between modified partial line data makes correspondence between partial line data before and after the replacement. The similar procedure can implement the addition. That is to say, a stroke constitutes the partial line data to be added when the stroke is written immediately after a caret detected by the function of control symbol recognition. New additional partial line data is to be inserted at the caret between the partial line data.

This makes it possible to reflect the modification of deletion, addition, replacement, and emphasis on computerized data and save its history without pressing a button installed at a specified location on the tablet or the paper.

When the user writes a symbol or character written on the tablet or paper, part of the symbol or character is interpreted as not only an ordinary character or symbol, but also a special control command for computerizing the written information. This makes it possible to perform a process corresponding to the command during computerization or a process on a computer after the computerization.

The detection of a character to be modified may use a character extraction information generated in the above-mentioned character recognition technique and insert control symbols such as the double-line and the surrounding line. In such case, high-precision detection is implemented by finding a degree of overlapping between the character extraction information and the control symbols and using the degree for determining the character to be modified.

The following describes computerization of application forms for a city office or a mail-order sale as an embodiment of the handwritten character input method according to the present invention. As handwriting input devices, there are known not only a tablet and a stylus, but also paper printed with a pattern for position detection and an electronic pen provided with a camera device for capturing an image of this pattern during writing. The example here uses paper having a print for position detection and an electronic pen. The National Publication No. 01/71473 brochure provides an example of such input devices.

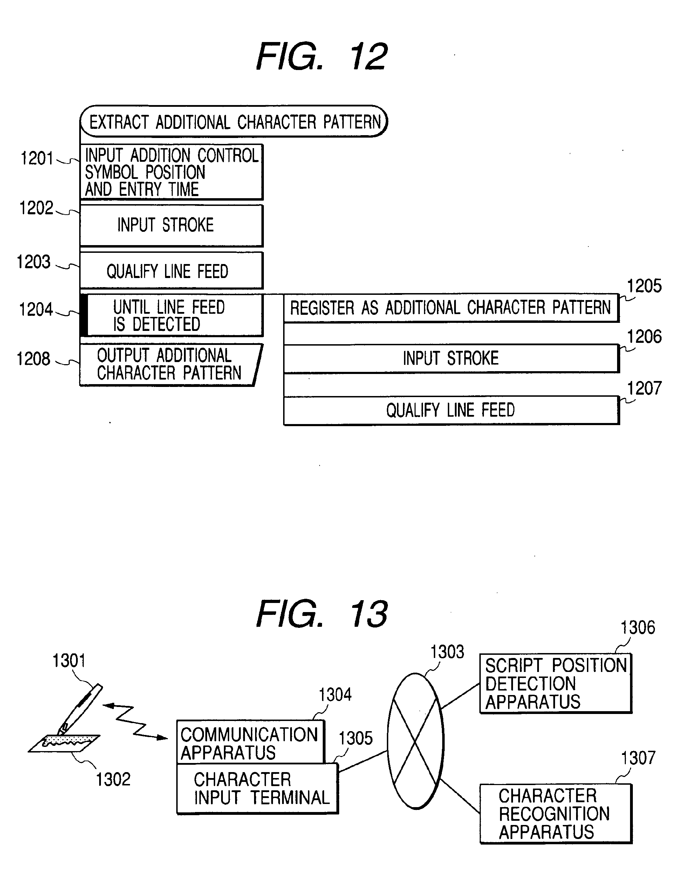

FIG. 13 shows an apparatus configuration of the embodiment. A user uses an electronic pen 1301 and paper 1302. The electronic pen communicates with a character input terminal 1305 via a communication apparatus 1304. As communication means between the electronic pen and the communication apparatus, there are available wireless means such as Bluetooth and infrared radiation and wired communication means such as USB and IEEE1394. The character input terminal communicates with a handwriting position detection apparatus 1306 and a character recognition apparatus 1307 via a network 1303. Applicable networks include the Internet, LAN, and the like. A single apparatus may implement a combination of any of the character input terminal, the handwriting position detection apparatus, and the character recognition apparatus. The apparatus configuration according to the embodiment has been described so far. The handwriting position detection apparatus 1306 uses a storage means to store an ID code of the pen and an ID code of the writing surface. The handwriting position detection apparatus 1306 specifies the pen and the writing surface based on the information from the pen and transfers the information about the writing surface to the computer.

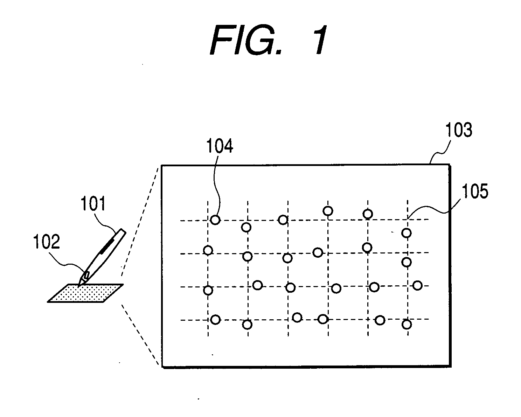

The following describes the principle of detecting positions using the electronic pen. This principle is disclosed in the National Publication No. 00/73983 brochure. Referring now to FIG. 1, the following describes the principle of detecting positions using the electronic pen. The reference numeral 101 represents an electronic pen, and 102 a camera device to capture a position detection pattern image printed on paper. Small dots 104 are slightly displaced from the grid and are printed on paper 103. Each dot is printed with vertical or horizontal displacement from a given intersecting point of a virtual grid 105. A plurality of dots, e.g., 10 by 10 is referenced at a time. A combination of vertical and horizontal displacement values for 100 dots provides the absolute position information on a vast plane area. The camera 102 attached to the electronic pen captures an image within a range including the dots patterns. This makes it possible to specify a position in the space formed of the combination of displacement values.

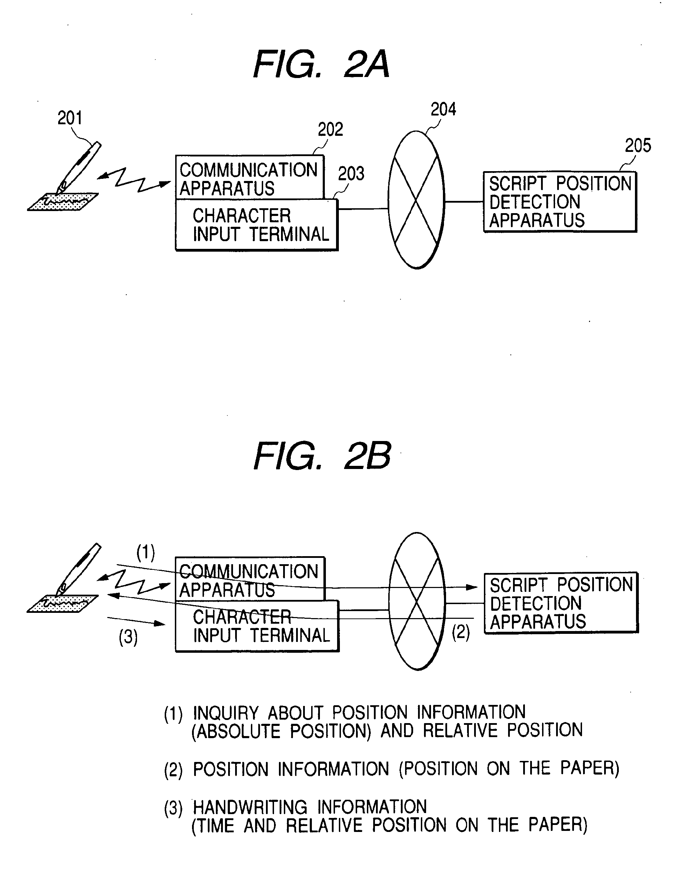

Actually, using a relative position on the paper is more practical than finding an absolute position in the space formed of the combination of displacement values. The handwriting position detection apparatus is provided for conversion between absolute and relative positions. The apparatus maintains information about correspondence between a position on the paper and part of the entire space formed of the combination of displacement values. The apparatus is supplied with an absolute position in the space and outputs a relative position on the paper. FIG. 2 (a) shows apparatus configuration for generating on-paper position information using the electronic pen including the handwriting position detection apparatus. FIG. 2 (b) shows an information flow in the configuration. This is described in the National Publication No. 01/48678 brochure.

The wireless communication is used for communication between the electronic pen 201 and the character input terminal 203 via a communication apparatus 202. When the electronic pen outputs data for the absolute position, the data is input to a handwriting position detection apparatus 205 via a wired or wireless network 204. The data is converted to express a relative position based on the paper and is output to the character input terminal. The handwriting position detection apparatus may be installed on the character input terminal.

The following describes computerization of information described on an application form at a city hall and the like using the handwritten character input device having the above-mentioned configuration.

In order to prepare the application for a city hall and the like, an applicant presently enters necessary items into an application form using writing utensils on a desk in the lobby. After completing the entry, he or she brings the application form to a counter and submits the form to a worker. The worker does his or her specified duties according to the information described on the application form. To computerize the contents of the form, the worker enters them by typing on a keyboard or using an OCR (optical character reader) to capture an image of the entire form and recognize characters included therein.

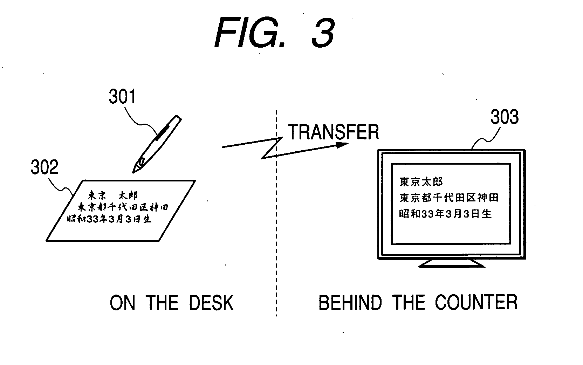

When the handwritten character input method according to the present invention is applied to the computerization of application forms, an application form is made of paper printed with dots for the position detection, and an electronic pen is used as writing utensils. In FIG. 3, there are provided an electronic pen 301 and an application form 302 printed with the dots on the desk. The applicant enters necessary items into the application form 302 using the electronic pen 301. While the applicant enters items using the electronic pen, the electronic pen stores its strokes on the application form as a series of position information. Upon completion of the entry, the stored information is transmitted to a handwritten character input terminal 303 inside the counter. Based on the data from the electronic pen as mentioned above, the handwritten character input terminal converts absolute position information in the space formed of the combination of displacement values on the application form into relative position information on the application form. As a result, a display section of the handwritten character input terminal displays characters and graphics written by the applicant on a screen.

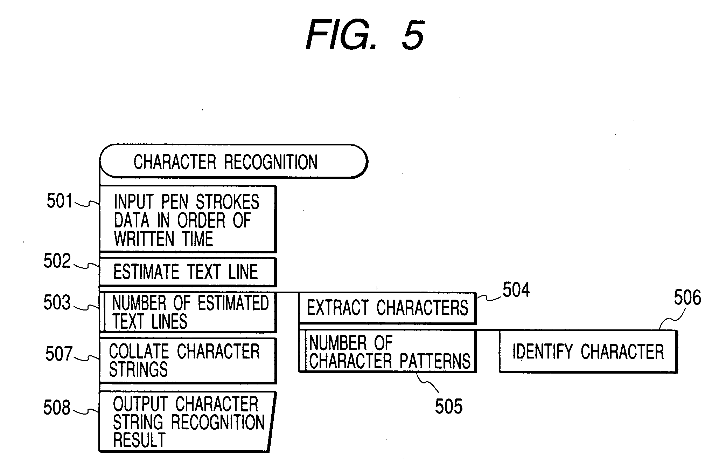

The character recognition is applied to the information such as characters and graphics received in the handwritten character input terminal 303, i.e., a set of stroke data. The handwritten character input terminal can store the coded data. This enables input to the next process such as an inquiry into databases or an application acceptance process, for example. The character recognition process will now be described with reference to FIG. 5.

First, the pen strokes data in order of written time is input to create pen strokes data (step 501). A text line is estimated from the pen strokes data to create an estimated text line (step 502). Character extraction 504 is performed for each estimated text line to divide strokes data in the estimated text line into a subset of strokes constituting each character. A set of the divided strokes is referred to as a character pattern. Character recognition 506 is performed for each character pattern to obtain a character recognition result. Finally, from the character recognition result for each character pattern, collation is performed (step 507) to determine whether or not the described character string is significant. The result is output (step 508).

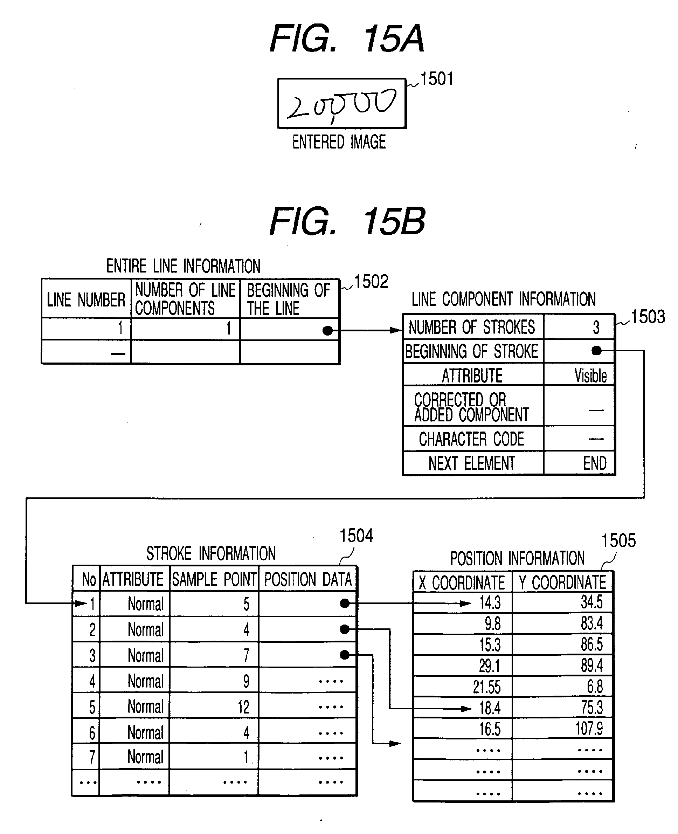

FIG. 15B shows an example of storing strokes data for an entered image in FIG. 15A. All strokes data is hierarchically managed by four tables: entire line information 1502, line component information 1503, stroke information 1504, and position information 1505. The entire line information is a table for managing each line created at step 502 in FIG. 5 and contains links to each line information. Since the entry example in FIG. 15 comprises a single line, only one piece of information is available. The line component information 1503 is a table for managing information about elements constituting a line (line components). This table manages the number of strokes, a link to the beginning of strokes, a line component attribute, a character code of the character recognition result, and a link to the next line component. The attribute includes Visible (normal component), Command (control symbol component), Delete (deletion target component), and Emphatic (emphasis target component). The beginning of strokes links to strokes constituting the line component. In this entry example, strokes No. 1 through 3 in the stroke information 1504 correspond to the line information 1503. Each stroke manages links to sampling points constituting the stroke as position data to be able to reference the position information 1505. The stroke attribute includes Normal (original data) and Command (control symbol). There has been described the method of storing strokes according to the embodiment.

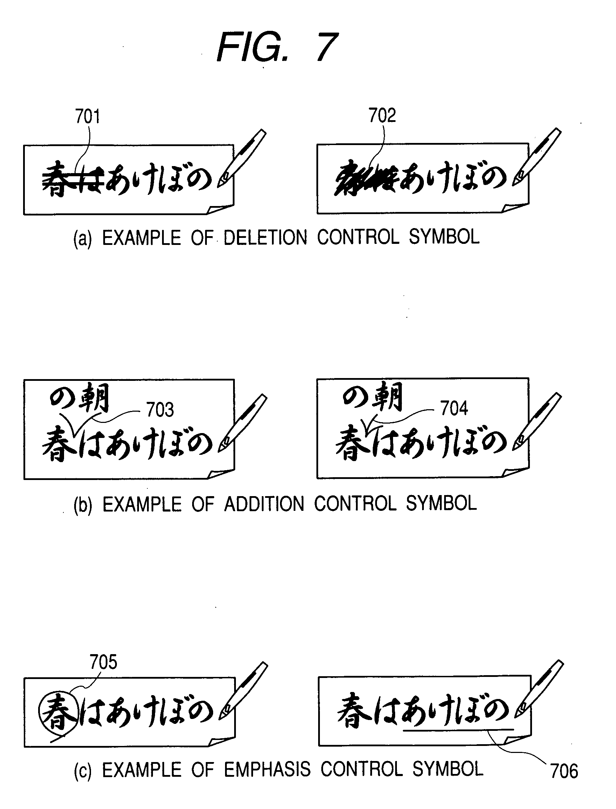

The following describes modification processes made available by the present invention, i.e., (a) deletion, (b) addition, (c) replacement, and (d) emphasis of an entered content. First, FIG. 7 shows control symbols used for the embodiment. These control symbols are the same as those used for ordinary proofreading of documents using paper and a pen.

The symbols as shown in FIG. 7 are just examples. A user may customize special symbols. In this case, a storage means of the character recognition apparatus stores a set of the control symbol shape and the corresponding operation. Alternatively, it may be preferable to provide the electronic pen with a button and use ON/OFF information of the button for control symbols.

The deletion control symbols include one or more lines 701 and a fill 702 . The addition control symbols include a caret (inverted caret) 703 and an arrow 704. The arrow can cross a line. The emphasis symbols include a surrounding frame 705 and an underline 705.

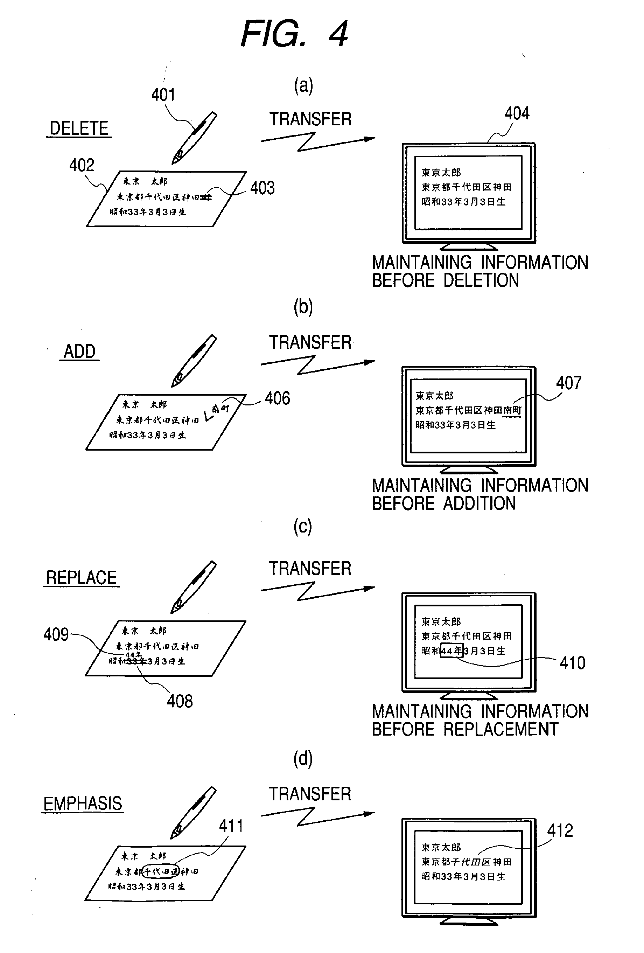

Referring now to FIG. 4, the following outlines the modification processes such as (a) deletion, (b) addition, (c) replacement, and (d) emphasis of an entered content.

FIG. 4 (a) illustrates the deletion of entered contents. When an applicant finds inadvertently writing character "CHOU" (Japanese), he or she overwrites it with a double-line 403 to delete "CHOU" (Japanese) on the application form. According to a specified procedure, handwriting information is transferred from an electronic pen 401 to a handwritten character input terminal 404. A screen of the handwritten character input terminal displays character information after the deletion. The handwritten character input terminal internally stores the information before the deletion and can display the character string before the deletion as needed.

FIG. 4 (b) illustrates addition of a new character. Let us consider that the applicant wants to add "MINAMICHOU" (Japanese) after "KANDA" (Japanese) in the character string "CHIYODAKUKANDA" (Japanese) described on the application form. The applicant writes a caret 405 on the end of "KANDA" (Japanese) on the application form and writes "MINAMICHOU" (Japanese) 406 nearby. According to a specified procedure, handwriting information is transferred from the electronic pen 401 to the handwritten character input terminal. The screen of the handwritten character input terminal displays a character image 407 after the addition. It is also possible to display the entire contents on the application form including the caret.

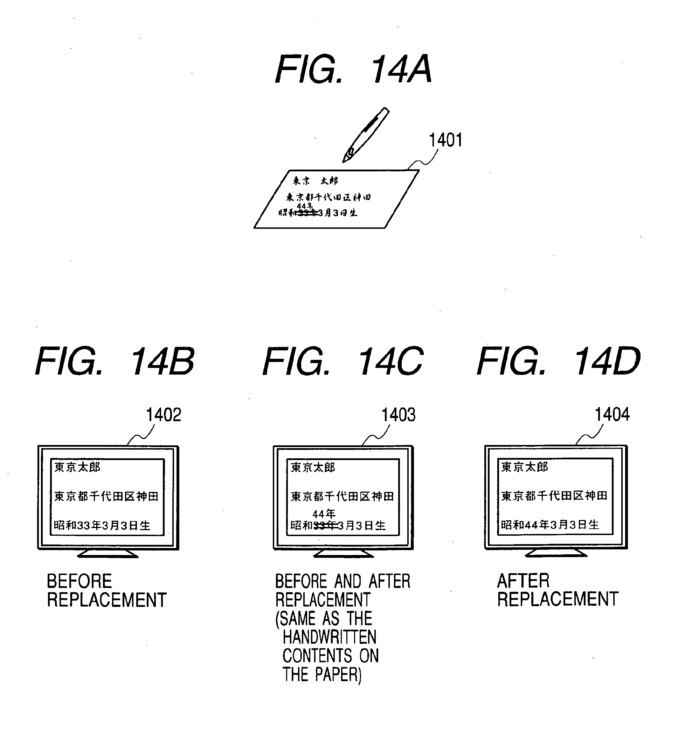

FIG. 4 (c) illustrates the replacement. When the applicant finds inadvertently writing "33 NEN" (Japanese), he or she overwrites it with a double-line 408 on the application form, and then writes a correct "44 NEN" 409 thereafter. According to a specified procedure, handwriting information is transferred from the electronic pen to the handwritten character input terminal. The screen of the handwritten character input terminal displays a replaced character image 410 after the replacement. The handwritten character input terminal internally stores the information before the replacement and can simultaneously display character strings before and after the replacement as needed. When the applicant performs operations as shown in FIG. 14A, for example, the handwritten character input terminal can display character strings before the replacement (FIG. 14B), before and after the replacement (FIG. 14C), and after the replacement (FIG. 14D).

FIG. 4 (d) illustrates the emphasis of entered character strings. To emphasize a character string, e.g., "CHIYODAKU" (Japanese) written on the application form, the applicant writes a surrounding line 411 so as to include "CHIYODAKU" (Japanese) on the application form. According to a specified procedure, handwriting information is transferred from the electronic pen to the handwritten character input terminal. The screen displays "CHIYODAKU" (Japanese) with emphasis, e.g., with highlight 412.

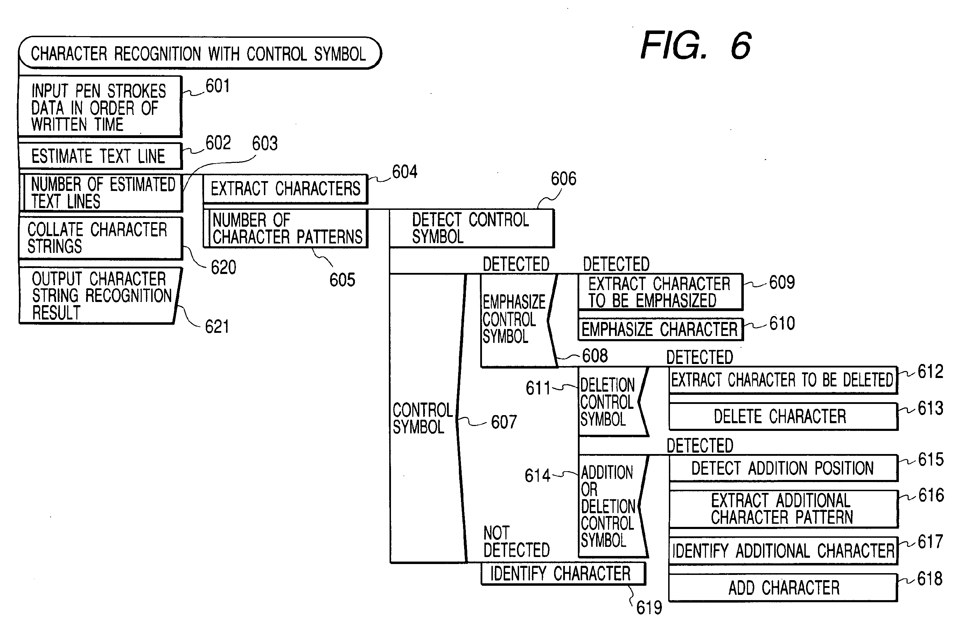

FIG. 6 explains a specific process to implement the above-mentioned deletion, addition, replacement, and emphasis of handwritten input. First, the process inputs a pen strokes data in order of written time to create stroke data (step 601). The process then estimates a text line from the strokes data to create an estimated text line (step 602). The process performs character extraction 604 for each estimated text line to divide strokes data in the estimated text line into character patterns comprising sets of strokes constituting each character.

The process first performs control symbol detection 606 for each character pattern. This step uses a control symbol shape stored in the storage means of the character recognition apparatus. As mentioned above, the storage means registers a set of each control symbol shape and the corresponding operation. When a control symbol is detected, the corresponding operation can be obtained.

When an emphasis control symbol is detected during the control symbol detection, the process extracts a character to be emphasized (step 609) to perform character emphasis 610.

When a deletion control symbol is detected, the process extracts a character to be deleted (step 612) to perform character deletion 613.

When an addition or deletion control symbol is detected thereafter, the process performs the character addition at step 615 and later. Here, the condition to activate the character addition uses not only an addition character, but also a deletion character so that the condition can comply with the character replacement. The character replacement requires an entry of the deletion control symbol such as a double-line immediately followed by an additional character. The character replacement can be assumed to be a combination of the character deletion and the character addition.

During the character addition, the process determines an addition position based on the addition control symbol position (step 615) and extracts an additional character pattern (step 616). Step 616 will be discussed in more detail below. The process then identifies each additional character (step 617) and performs character addition 618. During the character replacement, the deletion control symbol position gives a position of the character to be added.

If no control symbol is detected during the control symbol detection 605, the process performs character identification 619 for the character pattern to obtain a character identification result. According to the character identification result for each character pattern, the process finally checks if the handwritten character string is significant (step 620) and outputs the result (step 621).

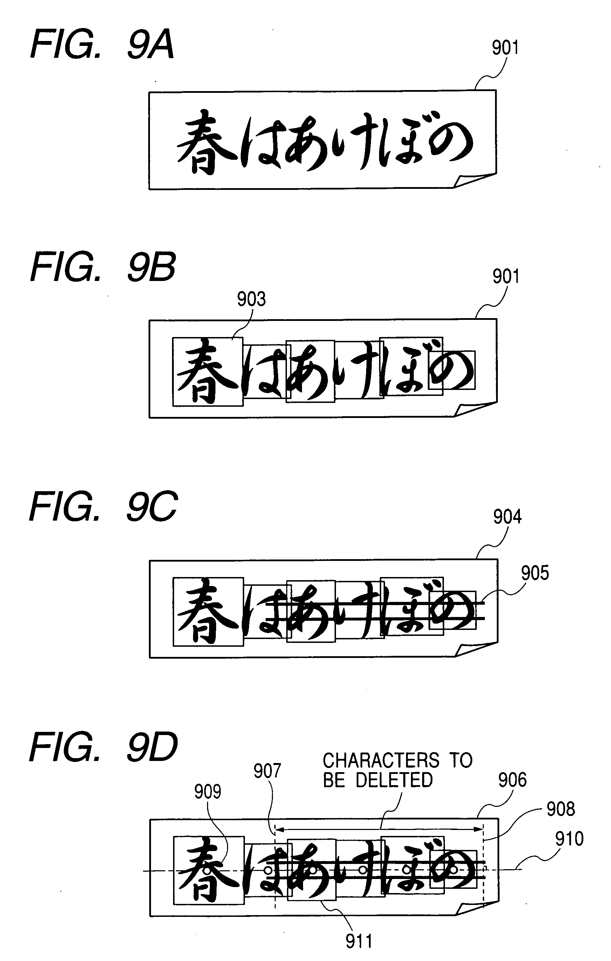

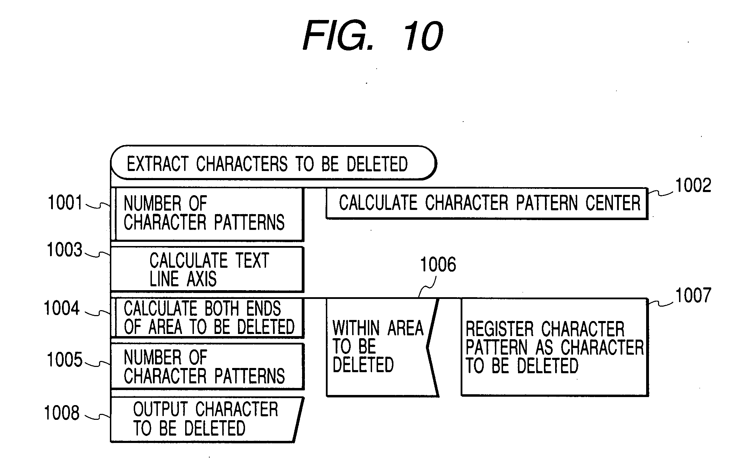

Basically, the same technique can be used to detect characters to be deleted or emphasized. Referring now to FIGS. 9A through 9D and 10, the following exemplifies a method of extracting characters to be deleted from the viewpoint of the center point of a rectangle circumscribing each character when a double-line is used to specify characters to be deleted. In this example, a character string 901 is entered. The process extracts a text line and characters to obtain a character pattern 902. The process identifies a character from each character pattern to obtain a character identification result, i.e., a character string of "HARUHAAKEBONO" (Japanese). Here, it is assumed that a user adds a double-line 905 as the deletion control symbol. Here, the technique according to the present invention is used to extract characters to be deleted. First, a center point 909 is found for each character pattern (step 1002). Based on a set of obtained center points, the least squares method or the like is used to approximate a line and compute a character string axis 910 (step 1003). With reference to the character string axis 910, perpendicular lines (907 and 908) are given to both ends of the double-line (905) to determine both ends of a deletion character area (step 1004). If the center point of a given character pattern is included in the deletion character area, that character pattern is registered as a deletion target character, i.e., a character to be deleted (step 1007). Finally, the deletion target character is output (1008). In this manner, deletion target characters are extracted.

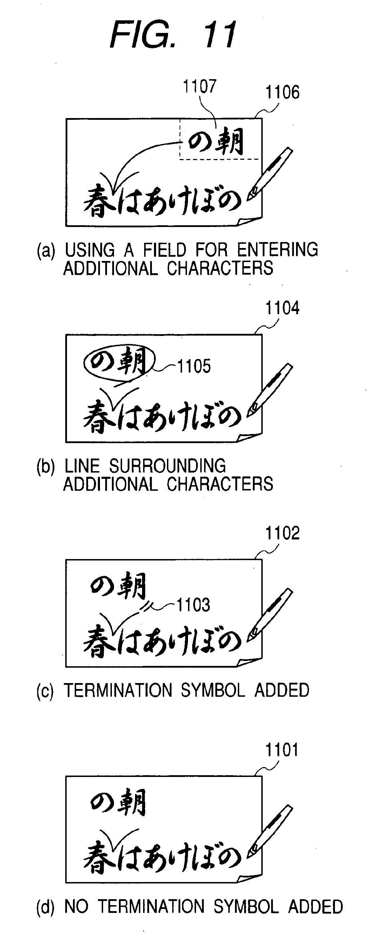

The embodiment uses the center of a rectangle circumscribing each character pattern to detect a character to be modified. Instead, it may be preferable to use the center of a black pixel constituting the character or an area ratio of the deletion character area to the rectangle circumscribing each character pattern. As shown in FIG. 11, four modes are available for entering additional characters. The following describes a flow of the additional character pattern extraction (step 616 in FIG. 6) in each mode.

The first mode (a) provides a page space with a special field for additional characters. A user needs to use this field to enter characters. The special field makes it easy to extract additional character patterns but forces users to use the special entry method.

The second mode (b) uses a surrounding line to specify additional character. To extract an additional character pattern, it is possible to use the same method as that of detecting characters to be emphasized.

The third mode (c) uses the termination symbol such as a double-slash at the end of additional characters. The beginning of additional characters is detected according to a position of the addition control symbol such as a caret or arrow and information about the time the additional characters were entered. Accordingly, it is possible to detect the beginning and end of additional characters and extract additional character patterns.

The fourth mode (d) requires nothing at the end of additional characters. In this case, a carriage return can be used as information for notifying the end of the additional characters. In this mode, nothing needs to be entered except the addition control symbol and additional characters. This mode is most approximate to the ordinary proofreading. Accordingly, it is desirable that the additional character pattern extraction (step 616 in FIG. 6) should at lest comply with this mode. FIG. 12 exemplifies a flow of the additional character pattern extraction compliant with the fourth mode (d).

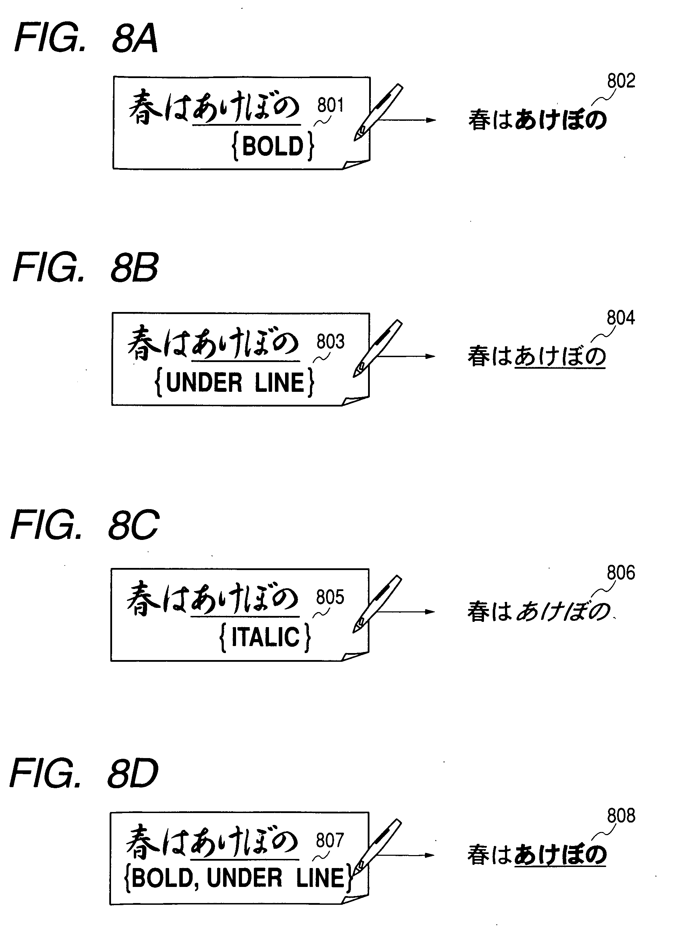

Here is the description of extended emphasis. More specifically, the following describes a method that allows a user to add a selected emphasis type to the emphasis control symbol entered. FIGS. 8A through 8D show how to directly add an intended emphasis type using parentheses. Interpreting the added emphasis type can provide more versatile emphasis processing. As a specific procedure, it just needs to execute an emphasis type collation process before the emphasis target character extraction at step 609 in the character recognition flow with control symbol in FIG. 6. The emphasis type collation process extracts a character pattern indicating the emphasis type, identifies the corresponding characters, and determines the emphasis type according to the character identification result. Alternatively, it may be preferable to specify the emphasis type by selectively using the emphasis control symbols.

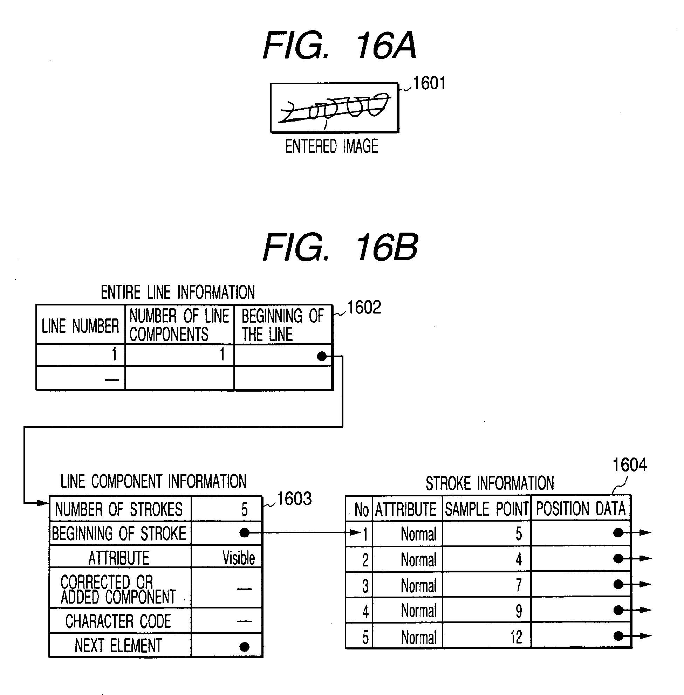

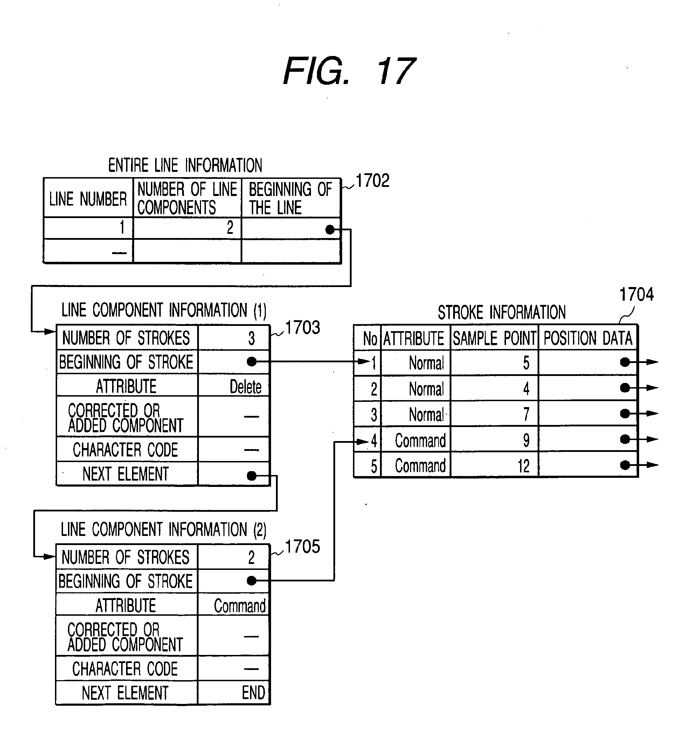

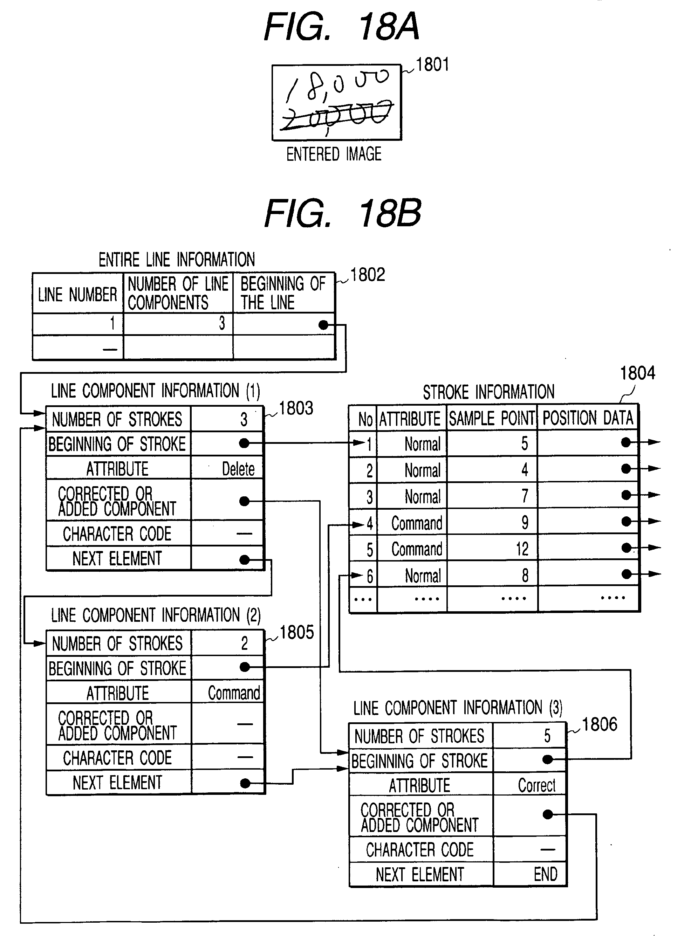

The following describes a method of storing strokes data when the above-mentioned entry contents are modified. For example, the description below uses FIG. 16B before deletion and FIG. 17 after deletion when an entered image in FIG. 16A is to be deleted. Before the deletion (FIG. 16B), there is one line component having the Visible (normal component) attribute. After executing the above-mentioned modification of entry contents (FIG. 16), the process recognizes the double-line as a deletion control symbol. The data structure changes as shown in FIG. 17. That is to say, line component information 1603 in FIG. 16B is divided into a line component 1703 as a character constituent and a line component 1705 as a deletion control symbol. The former is a deletion target and is assigned with the Delete attribute. The latter is a control symbol and is assigned with the Command attribute. The replacement as shown in FIG. 18A adds a new line component 1806 having the Correct attribute for the replacement (FIG. 18B). The storage method makes it possible to comprehensively handle strokes data before and after the modification and enables versatile display modes as shown in FIGS. 14B through 14D.

According to the apparatus configuration according to the embodiment, the handwritten character input terminal (e.g., 303 in FIG. 3) may be located remotely from the user who fills in an application form. In such case, the user cannot confirm a result of modifications he or she made. To solve this, it is desirable to provide any notification means. For example, a desk for application forms is provided with a display unit that displays the same contents as those on the display section of the handwritten character input terminal. Another possible solution is to provide the pen with an indicator. The indicator lights when the control symbol such as a double-line is recognized. When a process is executed by the control symbol and terminates normally, the indicator turns off or the pen itself vibrates to alert the user. In this case, the character recognition apparatus needs to send a signal to the electronic pen. There must be bidirectional communication between the electronic pen 1301 and the communication apparatus 1304 in FIG. 13.

There must be security considerations when the handwritten character input means using a tablet or an electronic pen is applied to an application form submission system in city halls and the like. It is necessary to accept an submitted application form after confirming that the applicant is a beneficiary or is identified. In other words, there may be a case where the application form is determined not to be accepted because the application form is not created by the beneficiary. In such case, if there is available data by computerizing the text information handwritten by the applicant, that data must not be supplied to an application system inside the city hall. A technique to implement this is to authenticate the application form by computerizing a character string such as the applicant's signature having properties capable of identifying the individualities. In this manner, the technique determines the character string written by the applicant or the validity of the request represented by the character string. For example, the technique collates the applicant's name written at a specified position on the form with the already registered signature. If the applicant is identified, the handwriting information is computerized. Alternatively, an inquiry is made into a database on the computer. If the applicant is not identified, the handwriting information is not computerized, or no inquiry is permitted into the database on the computer. The technique disclosed in Japanese Patent Laid-open No. H7(1995)-302340 can be used to determine whether or not the name's character string matches the registered signature.

As mentioned above, the present invention can automatically perform processes on the computer with respect to modifications of the entered contents such as deleting, adding, replacing, and emphasizing entered characters by providing the entry means using a tablet or an electronic pen with the same work feeling as for ordinary writing using paper and a pen.

## Claims

1. A handwritten character input device networked to an electronic pen capable of outputting information about a writing position on a writing surface and information about a time to obtain the information,
wherein the handwritten character input device has a control means, a display, and a storage;
the storage stores a plurality of control symbols;
the control means controls:
a step of extracting the control symbol from writing position information obtained from the electronic pen,
a step of determining a type of the control symbol and performing a corresponding and stored process, and
a step of using writing position information after execution of the process and allowing the display to display an entry onto the writing surface; and
the stored process includes at least deletion and addition of the writing position information.

2. The handwritten character input device according to claim 1, wherein the stored process also includes modification of the writing position information.

3. The handwritten character input device according to claim 1, wherein
the control means further controls:
a step of reproducing description onto a writing surface from writing position information obtained from the electronic pen,
a step of extracting a text line from the reproduced description, and
a step of extracting a character pattern from the text line.

4. The handwritten character input device according to claim 2, wherein
the control means further controls:
a step of reproducing description onto a writing surface from writing position information obtained from the electronic pen,
a step of extracting a text line from the reproduced description, and
a step of extracting a character pattern from the text line.

5. The handwritten character input device according to claim 4, wherein a target of the deletion is determined by the control symbol for specifying the deletion and an overlap with the character pattern.

6. The handwritten character input device according to claim 4,
wherein the control means further controls a step of identifying characters in the character pattern.

7. The handwritten character input device according to claim 5,
wherein the control means further controls a step of identifying characters in the character pattern.

8. A handwritten character input device networked to an electronic pen capable of outputting information about a writing position on a writing surface and information about a time to obtain the information,
wherein the handwritten character input device has a control means, a display, and a storage;
the storage stores a symbol to specify an addition location;
the control means controls:
a step of extracting the symbol to specify an addition location from information obtained from the electronic pen and determining an addition location,
a step of detecting information to specify the beginning and end of the addition information from the writing position information,
a step of extracting the writing position information as addition information, wherein the writing position information is obtained between a time to obtain the information to specify the beginning of the addition information and a time to obtain the information to specify the end thereof,
a step of inserting the addition information between the writing position information before the addition location and the writing position information thereafter, and
a step of representing description on a writing surface from the inserted writing position information and allowing the display to display the description.

9. The handwritten character input device according to claim 8,
wherein the control means controls:
a step of extracting information equivalent to a specified area on the writing surface from the writing position information and uses the extracted information as addition information
instead of a step of detecting information to specify the beginning and end of the addition information from the writing position information and a step of extracting the writing position information as addition information, wherein the writing position information is obtained between a time to obtain the information to specify the beginning of the addition information and a time to obtain the information to specify the end thereof.

10. The handwritten character input device according to claim 1,
the control symbol is any one of On/Off information of the pen, information about a writing position in a specified area on the writing surface, and writing position information to form a specified symbol.

11. A handwritten character input program comprising the steps of:
obtaining information about a writing position on a writing surface and information about a time to obtain the information via a network;
extracting a control symbol stored in a storage from the writing position information;
deleting at least part of the writing position information or combining the writing position information with newly obtained writing position information based on the control symbol;
reproducing description onto a writing surface from writing position information after the deletion or combination step; and
allowing a display to display the reproduction.

12. A handwritten character input system comprising:
an electronic pen capable of outputting information about a writing position on a writing surface together with information about a time to obtain the information; and
a computer networked to the electronic pen,
wherein the computer is a handwritten character input device according to claim 1.

13. The handwritten character input system according to claim 12 wherein the handwritten character input system further comprises a server; and the server stores an ID code of the pen and an ID code of the writing surface, specifies the pen and the writing surface based on information from the pen, and transfers information on the writing surface to the computer.
